# EUROPEAN PATENT APPLICATION

(11) **EP 1 741 406 A1**
(43) Date of publication of application: **10.01.2007**
(21) Application number: 05014733.9
(22) Date of filing: 07.07.2005
(51) Int. Cl.: A61C 15/00, A46B 7/04

(54) **Automatic interdental cleaner**

(71) Applicant: Kang, Young-Han, Jakarta (ID)
(72) Inventor: Kang, Young-Han, Jakarta (ID)
(74) Representative: Kahlhöfer, Hermann

(57) **Abstract**

An automatic interdental cleaner (1) for cleaning between teeth more effectively and cleanly without hurting the gum between the teeth is disclosed. The cleaner comprises: a grip portion (100) disposed therein with a battery and a motor and a power switch (110) at one wall side; a power transmitting unit (200) coupled to one end of the grip portion for supplying power from the grip portion and formed with a first insertion hole (210) at a free end; an interdental brush portion (300) including a brush holder (310) having a shape corresponding to that of the first insertion hole of the power transmitting unit and also having one end (311) insertedly fixed to the first insertion hole, and a brush (320) fixed to the other end of the brush holder; and an adapter portion one end (410) of which is coupled to the power transmitting unit and the other end (430) of which accepts the interdental brush portion, such that spaces between the theeth can be automatically cleaned using the automatic interdental cleaner.

## Description

### FIELD OF THE INVENTION

The present invention relates to an automatic interdental cleaner for removing foreign objects between teeth, and more particularly an automatic interdental cleaner adapted to be attached with an interdental brush or an adapter to a grip portion for automatic cleaning between teeth.

### BACKGROUND OF THE INVENTION

Interdental brushes are used as a part of the teeth-cleaning regimen by coupling an end of a handle with a brush or a dental floss. The interdental brushes are useful for removing food remains or dental calculus between teeth where conventional toothbrushes do not touch. They are also useful for cleaning various dental prostheses, such as braces, around various bridgeworks, and improving the level of a person's oral care hygiene.

The interdental brushes thus explained are disclosed in US Patent No. 5,896,615 granted to Colgate-Palmolive Company.

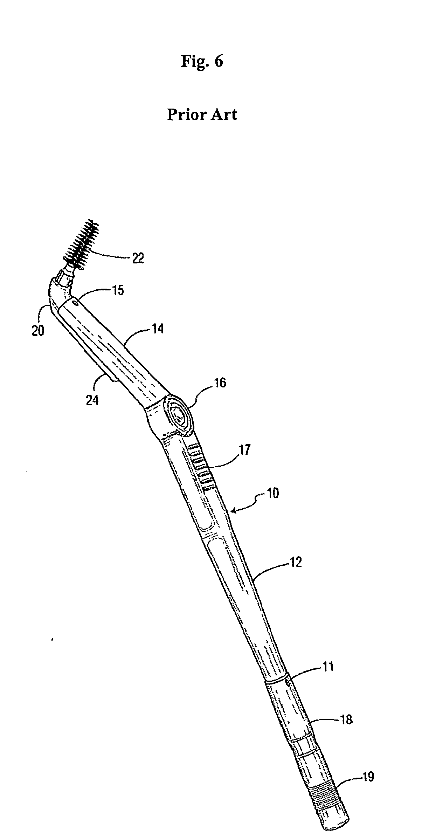

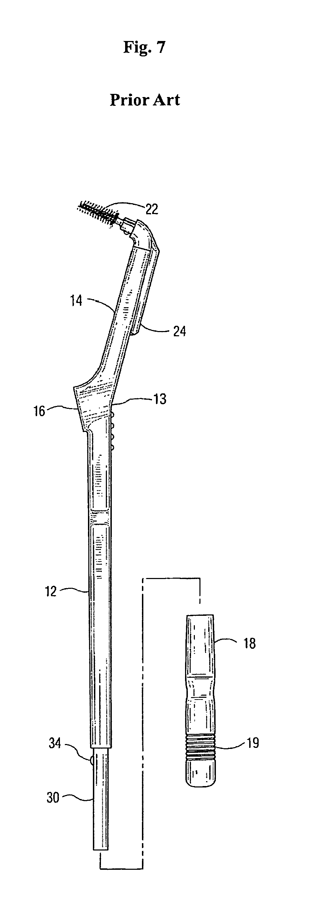

Interdental brushes according to the prior art will be described with reference to FIGS. 6 and 7. FIG.6 is a perspective view of an interdental brush according to the prior art, and FIG.7 is a lateral view of the interdental brush of FIG.6 removed of an end of a handle.

Referring to FIGS. 6 and 7, an interdental brush (10) is equipped at one end thereof with a handle grip portion (12) with a sloped brush head support portion (14). A brush head cartridge (20) with a brush (22) projecting upwardly therefrom is extended from brush head support portion (14).

A first longitudinal rod section (24) is a part of the brush head attachment means. An aperture (15) on the brush head portion accepts a protrusion on the brush head cartridge (20) to lock the brush head cartridge into the sloped brush head support portion.

At the end of the handle grip portion (12) opposite the brush head portion, there is a movable section (18), which carries a grip (19). This is held in place by a protrusion (34) on a brush head support rod (30) (see FIG.7), which extends into an aperture (11) of the movable section (18).

In the interdental brushes thus described, after assembled, the handle grip portion (12) can be held by hands and the brush can be manually inserted between teeth. In the interdental brushes according to the prior art, dental floss or thin synthetic resin piece may be inserted between teeth instead of a brush.

However, there is a problem in the interdental brushes thus described according to the prior art in that gums may be hurt by dental floss or thin synthetic resin piece when an excessive force is applied to the gums. There is another problem in that the interdental brushes may not clean between teeth in the desired state due to inattention by a user.

### SUMMARY OF THE INVENTION

The present invention is disclosed to solve the aforementioned problems and it is an object of the present invention to provide an automatic interdental cleaner adapted not to hurt gums between teeth and to effectively clean between the teeth as well.

In accordance with the object of the present invention, the automatic interdental cleaner is provided, the cleaner comprising: a grip portion disposed therein with a battery and a motor and a power switch at one side wall; a power transmitting unit coupled to one end of the grip portion for supplying power from the grip portion and formed with a first insertion hole at a free end; and an interdental brush portion including a brush holder having a shape corresponding to that of the first insertion hole of the power transmitting unit and also having one end insertedly fixed to the first insertion hole, and a brush fixed to the other end of the brush holder.

The automatic interdental cleaner further comprises an adapter portion one end of which is coupled to the power transmitting unit and the other end of which accepts the interdental brush portion.

The adapter comprises: a connecting portion surrounded on a peripheral surface of the power transmitting unit and disposed at a lateral wall thereof with a fixing hook meshing with the power transmitting unit; an extension portion extended from the connecting portion; and an interdental brush holder disposed at one end thereof with a second insertion hole having a shape corresponding to that of the end of the brush holder.

The interdental brush holder is slantly connected at a predetermined angle relative to the extension portion.

The interdental brush holder is inclined at 80-120 degrees relative to the extension portion, and more preferably, at 90-100 degrees.

The second insertion hole may be of a cylindrical or a plate shape at one end thereof.

### BRIEF DESCRIPTION OF THE DRAWINGS

The accompanying drawings illustrate preferred embodiments of the present invention and are a part of the specification. Together with the following description, the drawings demonstrate and explain the principles of the present invention. The illustrated embodiments are examples of the present invention and do not limit the scope of the invention.
FIG. 1 a perspective view for schematically illustrating an automatic interdental cleaner according to a first embodiment of the present invention;
FIG.2 is a perspective view for illustrating an interdental brush portion of FIG.1;
FIG.3 is a perspective view for schematically illustrating an automatic interdental cleaner according to a second embodiment of the present invention;
FIG.4 is a plan of an adapter portion of FIG.3;
FIG. 5 is a lateral of the adapter portion of FIG.3;
FIG.6 is a perspective view of an interdental brush according to the prior art; and
FIG.7 is a lateral view removed of an end of a handle at the interdental brush of FIG.6.

### DETAILED DESCRIPTION OF THE INVENTION

The automatic interdental cleaner according to the preferred embodiments of the present invention will now be described in detail with reference to the annexed drawings.

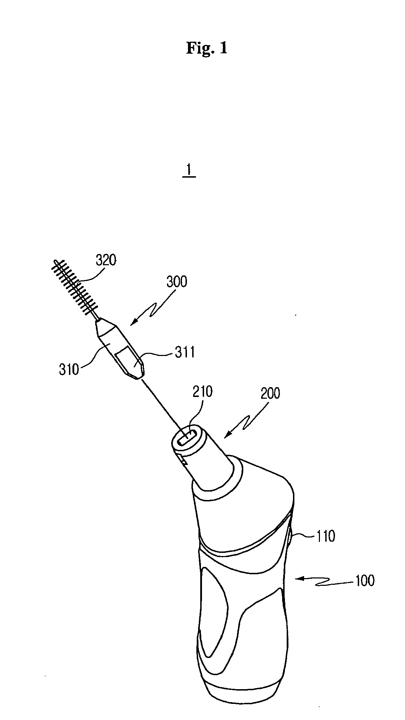

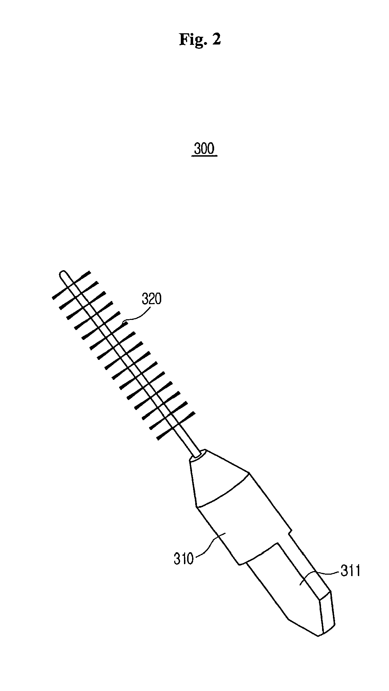

FIG. 1 a perspective view for schematically illustrating an automatic interdental cleaner (1) according to a first embodiment of the present invention and FIG.2 is a perspective view of an interdental brush portion (300) of FIG.1.

Referring to FIG.1, an automatic interdental cleaner (1) according to the first embodiment of the present invention includes a grip portion (100), a power transmitting unit (200) and an interdental brush portion (300).

The grip portion (100) is disposed therein with a battery (not shown) and a motor (not shown). The grip portion (100) is disposed at one lateral wall thereof with a power switch (110) that is circuitally connected to the battery (not shown) and the motor (not shown).

The power transmitting unit (200) is cylindrically shaped and coupled to one end of the grip portion (100). The power transmitting unit (200) receives the power from the motor (not shown) formed inside the grip portion (100) on switching and vibrates thereby.

A free end of the power transmitting unit (200) is formed with a first insertion hole (210) which, as shown in FIG.1, has a rectangular plate shape but may carry a variety of shapes like cylindrical shape, spiral shape and the like.

The interdental brush (300) includes a brush holder (310) whose one end is fixedly inserted into the first insertion hole (210) and a brush (320) that is fixed to the other end of the brush holder (310).

Referring to FIG.2, the brush holder (310) has a plate shape at one end (311) thereof. The one end (311) of the brush holder (310) has a shape corresponding to that of the first insertion hole (210) so as to be inserted into the first insertion hole (210) formed at the power transmitting unit (200). For that reason, in case the first insertion hole (210) has a cylindrical shape or a spiral shape, the one end of the brush holder (310) is to subsequently have a shape corresponding to that of the first insertion hole (210).

The brush holder (310) has a cylindrical shape at the other end thereof to which the brush (320) is fixed. The brush holder (310) may be made of resilient material like rubber or synthetic resin material.

Hereinafter, the operation of the automatic interdental cleaner according to the first embodiment of the present invention will be described.

First of all, the first insertion hole (210) at the power transmitting unit (200) is inserted by the one end (311) of the brush holder at the interdental brush portion (300). Because the shape of the first insertion hole (210) and that of the one end of the brush holder (311) are correspondingly matched, the interdental brush portion (300) is fixed in the first insertion hole (210) when the one end (311) of the brush holder is inserted into the first insertion hole (210).

Thereafter, when the power switch (110) is pressed, the motor (not shown) disposed inside the grip portion (100), which is circuitally connected to the power switch (110) is vibrated. The vibration of the motor (not shown) is transmitted to the power transmitting unit (210), and the vibration of the power transmitting unit (210) is in turn transmitted to the interdental brush portion (300).

When the vibrating brush (320) is inserted between teeth, food remaining or tartar between the teeth can be automatically removed. The gum contacting the interdental brush portion (300) is not hurt because the brush (320) is soft.

When the cleaning between the teeth is over and the brush (320) is removed from between the teeth and the power switch (110) is turned off, the vibration is stopped. Following the completion of the vibration, the interdental brush (300) is separated from the first insertion hole (210), cleansed and stored.

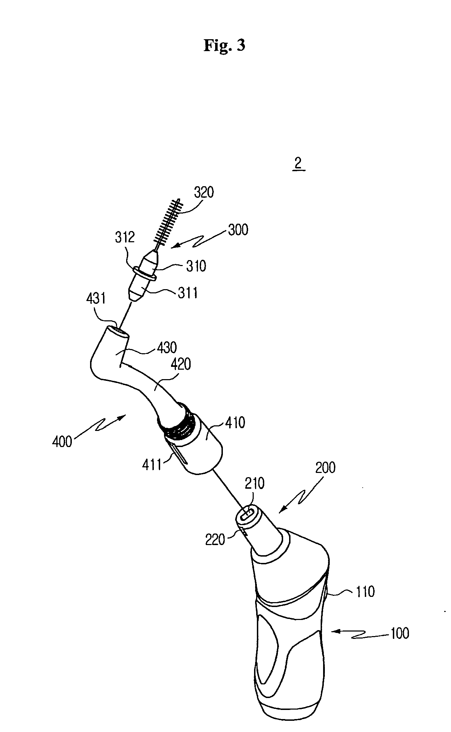

Now, referring to FIGS. 3 to 5, the automatic interdental cleaner according to the second embodiment of the present invention will be described. The same reference numerals refer to the same parts or portions throughout the various figures, and explanation of the same elements will be briefed.

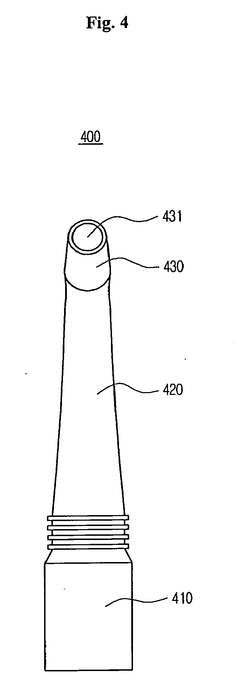

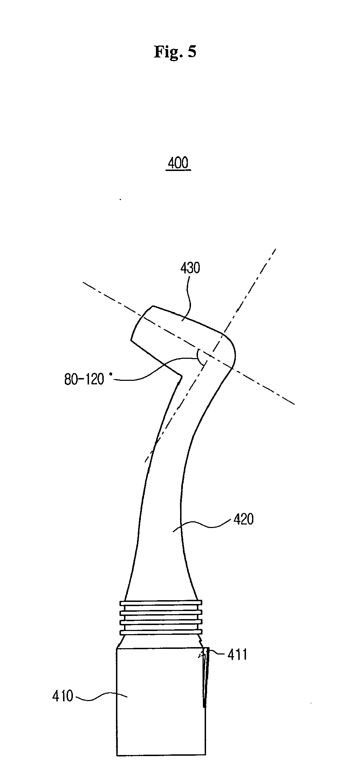

FIG.3 is a perspective view for schematically illustrating an automatic interdental cleaner according to a second embodiment of the present invention, FIG.4 is a plan view of an adapter portion (400) of FIG.3, and FIG. 5 is a lateral view of the adapter portion (400) of FIG.3.

Referring to FIG. 3, an automatic interdental cleaner (2) according to the second embodiment of the present invention includes a grip portion (100), a power transmitting unit (200), an interdental brush portion (300) and an adapter portion (400).

The grip portion (100) is disposed therein with a battery (not shown) and a motor (not shown). The grip portion (100) is disposed at one lateral wall thereof with a power switch (110) that is circuitally connected to the battery (not shown) and the motor (not shown).

The power transmitting unit (200) is cylindrically shaped and coupled to one end of the grip portion (100). The power transmitting unit (200) receives the power from the motor (not shown) formed inside the grip portion (100) and vibrates thereby. The power transmitting unit (200) is formed at one lateral wall thereof with an aperture (220).

The interdental brush portion (300) includes a brush holder (310) for insertion into the adapter portion (400), and a brush (320) fixed to the other end of the brush holder (310). One end (311) of the brush holder (310) may be cylindrical as shown in FIG.3, or may be of plate shape as shown in FIGS. 1 and 2. The end (311) may carry a variety of shapes.

The adapter portion (400) is coupled at one end thereof to the power transmitting unit (200), and the other end of the adapter portion (400) receives the interdental brush portion (300).

Now, the adapter portion (400) will be described in detail with reference to FIGS. 4 and 5.

The adapter portion (400) comprises a connecting portion (410), an extension portion (420) and an interdental brush holder (430).

The connecting portion (410) is surrounded on the peripheral surface of the cylindrical power transmitting unit (200). The connecting portion (410) is disposed at one lateral wall thereof with a fixing hook (411) that is hitched at the aperture (220) of the power transmitting unit (200). The fixing hook (411) is inserted into the aperture (220) to prevent the adapter portion (400) from rotating or being bolted.

The extension portion (420) extended from the connecting portion (410) has a predetermined curved or axial shape. The extension portion (420) may be integrally formed with the connecting portion (410), or may be glued or screwed to the connecting portion (410).

The interdental brush holder (430) is connected to an opposite side of the extension portion (420) that is in turn connected to the connecting portion (410). The interdental brush holder (430) is integrally formed with the extension portion (420) and is formed at one end thereof with a second insertion hole (431), the shape of which corresponds to that of the end (311) of the brush holder (310).

The second insertion hole (431) may have a cylindrical shape corresponding to that of the end (311) of the brush holder (310) as shown in FIGS. 3 and 4, but may carry a variety of shapes such as plate shape, screw shape and the like.

In case the end (311) of the brush holder (310) is cylindrical, an annular support plate (312) may be integrally formed with the midsection of the brush holder (310) for preventing the brush holder (310) from entering an interior of the second insertion hole (431) of the interdental brush holder (430).

The interdental brush holder (430) may be slantly connected to the extension portion (42) at a predetermined angle. The angle between the interdental brush holder (430) and the extension portion (420) is generally set at 80-120 degrees. Preferably, the angle between the interdental brush holder (430) and the extension portion (420) is given at 90-100 degrees. These angles are within an angle scope in which the brush (320) is conveniently and ergonomically positioned between teeth, when the grip portion (100) is held by a user.

Hereinafter, the operation of the automatic interdental cleaner according to the second embodiment of the present invention will be described.

First, an outside of the power transmitting unit (200) is fitted into by the connecting portion (410) of the adapter portion (400). The fixing hook (411) is made to get hitched at the aperture (220) of the power transmitting unit (200) to fix the adapter portion (400) and the power transmitting unit (200).

Thereafter, the interdental brush portion (300) is inserted into the second insertion hole (431) of the adapter portion (400). The brush holder (310) of the interdental brush portion (300) matches the shape to that of the second insertion hole (431) of the interdental brush holder (430) such that, when the second insertion hole (431) is inserted by the end (311) of the brush holder, the interdental brush portion (300) is fixed at the adapter portion (400).

Afterward, when the power switch (110) is pressed, the motor (not shown) disposed inside the grip portion (100) circuitally connected to the power switch (110) is vibrated. The vibration of the motor (not shown) is transmitted to the power transmitting unit (200), and vibration of the power transmitting unit (200) is in turn transmitted to the interdental brush portion (300).

When the vibrating brush (320) is inserted between teeth, food remains or tartar between the teeth can be automatically removed by the vibration. The gum contacting the interdental brush portion (300) is not hurt at all because the brush (320) is soft.

In the automatic interdental cleaner (2) according to the second embodiment of the present invention, the adapter portion (400) is separately attached to the power transmitting unit (200) such that many spaces near molar teeth that the brush (320) alone cannot penetrate can be easily cleaned. Furthermore, the extension portion (420) and the interdental brush holder (430) are inclined each at a predetermined angle, the teeth can be ergonomically cleaned at a convenient position.

The power transmitting unit (200) of the automatic interdental cleaner (2) according to the second embodiment of the present invention is formed at a free end thereof with the first insertion hole (210) as in the automatic interdental cleaner (1) of the first embodiment. If the shape of the first insertion hole (210) and that of the second insertion hole (431) are the same, the interdental brush portion (300) may be inserted into either the first insertion hole (210) or the second insertion hole (431) as needed and required by a user.

Once the cleaning is over between the teeth, the brush (320) is removed from between the teeth, and the power switch (110) is turned off to stop the vibration. When the vibration is stopped, the interdental brush portion (300) and the adapter portion (400) are separated from the power transmitting unit (200), and cleaned and stored for after-use.

As apparent from the foregoing, there is an advantage in the automatic interdental cleaner thus described according to the embodiments of the present invention in that a soft brush is used to reduce the possibility of the gum being hurt. There is another advantage in that food remains or tartar can be automatically cleaned between teeth to increase a cleaning efficiency.

Therefore, the foregoing is considered as illustrative only of the principles of the invention. Further, since numerous modifications and changes will readily occur to those skilled in the art, it is not desired to limit the invention to the exact construction and operation shown and described, and accordingly, all suitable modifications and equivalents may be resorted to, falling within the scope of the invention.

## Claims

1. An automatic interdental cleaner comprising:
a grip portion disposed therein with a battery and a motor and a power switch at one wall side;
a power transmitting unit coupled to one end of the grip portion for supplying power from the grip portion and formed with a first insertion hole at a free end; and
an interdental brush portion including a brush holder having a shape corresponding to that of the first insertion hole of the power transmitting unit and also having one end insertedly fixed to the first insertion hole, and a brush fixed to the other end of the brush holder.

2. The cleaner as defined in claim 1 further comprising an adapter portion one end of which is coupled to the power transmitting unit and the other end of which accepts the interdental brush portion.

3. The cleaner as defined in claim 2, wherein the adapter comprises:
a connecting portion surrounded on a peripheral surface of the power transmitting unit and disposed at a lateral wall thereof with a fixing hook meshing with the power transmitting unit;
an extension portion extended from the connecting portion; and
an interdental brush holder disposed at one end thereof with a second insertion hole having a shape corresponding to that of the end of the brush holder.

4. The cleaner as defined in claim 3, wherein the interdental brush holder is slantly connected at a predetermined angle relative to the extension portion.

5. The cleaner as defined in claim 4, wherein the interdental brush holder is inclined at 80-120 degrees relative to the extension portion.

6. The cleaner as defined in claim 4, wherein the interdental brush holder is inclined at 90-100 degrees relative to the extension portion.

7. The cleaner as defined in claim 3, wherein the second insertion hole is cylindrical.

8. The cleaner as defined in claim 3, wherein the second insertion hole has a plate shape.
